# EUROPÄISCHE PATENTSCHRIFT

(11) **EP 3 718 649 B1**
(45) Veröffentlichungstag und Bekanntmachung des Hinweises auf die Patenterteilung: **12.07.2023**
(21) Anmeldenummer: 20166820.9
(22) Anmeldetag: 30.03.2020
(51) Int. Cl.: B07C 5/36, B25J 9/16

(54) **PLATTENPRODUKTIONSANLAGE MIT SORTIEREINRICHTUNG UND ENTSPRECHENDES VERFAHREN**
PLATE PRODUCTION SYSTEM WITH SORTING DEVICE AND METHOD
INSTALLATION DE FABRICATION DE PLAQUES POURVUE DE DISPOSITIF DE TRI, AINSI QUE PROCÉDÉ

(30) Priorität: 03.04.2019 DE 102019108776
(43) Veröffentlichungstag der Anmeldung: 07.10.2020
(73) Patentinhaber: SR-Schindler Maschinen - Anlagetechnik GmbH, 93057 Regensburg Bayern (DE)
(72) Erfinder:
(74) Vertreter: Bittner, Bernhard

(56) Entgegenhaltungen:
- WO-A1-2005/032733
- WO-A1-2008/047060
- WO-A1-2015/192882
- DE-A1- 4 120 155

## Beschreibung

Die Erfindung betrifft eine Plattenproduktionsanlage zur Produktion von Stein- und Betonplatten, wobei die Plattenproduktionsanlage wenigstens zwei Arbeitsstationen zum Herstellen der Platten aufweist und eine Fördereinrichtung welche die Platten in einer Förderrichtung transportiert. Die Plattenproduktionsanlage weist auch eine Kontrollstation zum Kontrollieren der Platten und eine Sortiereinrichtung zum Sortieren der Platten auf, wobei mindestens eine Robotereinrichtung zum Sortieren von Platten vorgesehen ist. Die Kontrollstation weist zudem eine Kontrolleinrichtung zum Markieren einer Platte und eine Bildaufnahmeeinrichtung zum Erzeugen von Positionssignalen auf, welche an die Robotereinrichtung sendbar sind.

Derartige Plattenproduktionsanlagen können beispielsweise als Hermetikpressen ausgebildet sein. Hierbei werden Stein- und Betonplatten, insbesondere Terrazzo- und Betonwerksteinplatten, Pflastersteine in Hermetikqualität, Terassen- und Gehwegplatten, sowie Einschicht- und Zweischichtplatten mit kombiniertem Filter- / Hermetikpressverfahren in einem fortlaufenden Produktionsprozess aus Beton, Zement, Steinen etc. hergestellt.

Bei derartigen Herstellprozessen kommt es häufig zu Ausschussware, das heißt, die Oberflächen verschiedener Platten können beispielsweise unterschiedliche Qualitätsanforderungen erfüllen. Hierdurch entsteht sogenannte A-Ware, B-Ware oder C-Ware. Um einem Kunden ausschließlich A-Ware in Form von hochwertigen, qualitativ sehr guten Plattenoberflächen zu bieten, müssen derartige Platten aussortierbar sein. Dies erfordert bisher eine aufwändige Handarbeit, die mit einer zuvor erfolgten Sichtkontrolle durch eine entsprechende Person gekoppelt ist. Dies ist zeit- und kostenaufwändig.

In der WO2015192882A1 wird eine Gruppe zum Klassifizieren und Sortieren von keramischen Produkten bestehend aus einem Brennofen, einem Sortiersitz zum Sortieren der Produkte und Mittel zur automatischen Bewertung offenbart. Die Klassifizierung erfolgt dabei vollautomatisch durch Aufnahme von Bildern, wobei diese auf geometrisch-mechanischen und/oder chromatischen Eigenschaften der Produkte über ein automatisches Bewertungssystem geprüft werden. Solche Klassifizierungs- und Sortierungssysteme sind sehr teuer und oft anfällig für Auswertefehler, die unter anderem durch Verschmutzung von Aufnahmegeräten verursacht werden könnten. Insbesondere hinsichtlich der gleichzeitigen Herstellung von unterschiedlichen Produkten innerhalb eines Herstellungszyklus, können in WO2015192882A1 beschriebenen Klassifizierungsgruppen nicht eingesetzt werden. Um die Herstellung von unterschiedlichen Produkten zu verwirklichen, ist bei solchen Systemen oft eine Anpassung der Referenzdaten notwendig, was viel Zeit in Anspruch nehmen kann, denn die Produktionsanlage müsste kurzfristig umgestellt und/oder gestoppt werden.

Somit ist es Aufgabe der Erfindung, eine Plattenproduktionsanlage mit einer Sortiervorrichtung und einem Sortiersystem zur Verfügung zu stellen, die kostengünstig und zeitsparend agieren kann.

Diese Aufgabe wird gemäß einer Plattenproduktionsanlage zur Produktion von Stein- und Betonplatten, wobei die Plattenproduktionsanlage wenigstens eine Arbeitsstation zum Herstellen der Platten aufweist und eine Fördereinrichtung welche die Platten in einer Förderrichtung transportiert. Die Plattenproduktionsanlage weist auch eine Kontrollstation zum Kontrollieren der Platten und eine Sortiereinrichtung zum Sortieren der Platten auf, wobei bevorzugt mindestens eine Robotereinrichtung zum Sortieren und/oder Transportieren von Platten vorgesehen ist. Die Kontrollstation weist zudem eine Kontrolleinrichtung zum Markieren einer Platte und eine Bildaufnahmeeinrichtung zum Erzeugen von Positionssignalen auf, welche an eine Robotereinrichtung sendbar sind. Somit kann die Robotereinrichtung markierte Platten selbstständig aussortieren. Es wäre jedoch auch möglich, dass anstelle einer Robotereinrichtung an einen Benutzer ein Signal ausgegeben wird.

Bevorzugt ist die Bildaufnahmeeinrichtung zur Aufnahme von Bildern und insbesondere zur Aufnahme von zweidimensionalen oder auch 3D-Bildern geeignet und bestimmt. Dabei gibt die Bildaufnahmeeinrichtung bevorzugt in Reaktion und/oder unter Berücksichtigung der aufgenommenen Bilder die oben erwähnten Positionssignale aus. Dabei kann die Bildaufnahmeeinrichtung eine Prozessoreinrichtung und/oder eine Auswerteeinrichtung aufweisen, welche die von der eigentlichen Bildaufnahmeeinrichtung aufgenommenen Bilder auswertet und in Reaktion hierauf die Positionssignale ausgibt.

Diese Positionssignale können dabei für die Positionen einzelner Platten innerhalb eines Produktstroms bzw. Plattenstroms charakteristisch sein. Auch oder zusätzlich können diese Positionssignale zum Identifizieren einzelner Platten dienen.

Für die Sortiervorrichtung ist eine Teilautomatisierung in ihrem Ablauf vorgesehen. Bevorzugt mittels der Robotervorrichtung können die verschiedenen Platten aufgegriffen werden, wodurch eine Aussortierung stattfindet. Bevorzugt weist die Robotervorrichtung eine Greifeinrichtung auf, die zum Greifen einzelner Platten oder auch von Gruppen von Platten geeignet und bestimmt ist.

Diese Teilautomatisierung betrifft daher einen Übergang der Platten von der Kontrollstation zur Sortiereinrichtung und das Sortieren von markierten Platten. Dabei arbeiten die Kontrolleinrichtung und Sortiereinrichtung bevorzugt im Betrieb einer Transporteinrichtung wie eines Transportbandes. Zudem sind bevorzugt durch die Plattenproduktionsanlage Platten wenigstens transportier- und sortierbar, wobei diese Platten als Terrazzo- und Betonwerksteinplatten, Pflastersteine, Terrassen-, Gehwegplatten, Einschicht- und/oder Zweischichtplatten ausgebildet sein können.

Gemäß der Erfindung ist die Kontrolleinrichtung als ein Kontrollstab ausgebildet, der insbesondere von einem Benutzer in der Hand haltbar. Durch einen Kontrollstab kann ein Benutzer auf einfache Weise eine fehlerhafte Platte markieren, indem er mit dem Starb auf die Platte zeigt. Vorzugsweise sind die Platten in liegender Ausrichtung, d.h. mit einer größten Fläche entlang der Längs- und der Querrichtung transportierbar, wobei sich insbesondere eine Plattenlänge in die Längsrichtung und eine Plattenbreite in die Querrichtung erstreckt. Vorzugsweise sind die Plattenlänge und die Plattenbreite jedoch an die Förderrichtung orientiert, sodass die Plattenlänge und/oder die Plattenbreite parallel oder senkrecht zur Förderrichtung ausgerichtet ist.

So kann der Benutzer die Qualität einer Platte schnell erkennen und die Platte liegen während des Transports stabiler. Bevorzugt sind durch die Plattenproduktionsanlage auch Träger transportierbar, auf denen mehrere Platten anordenbar sind. Dabei ist die Förderrichtung idealerweise eine gerade Richtung, wobei die Förderrichtung auch kurvig verlaufen kann. Dabei ist die Fördereinrichtung vorzugsweise als ein Transportband, eine Transportkette oder insbesondere als Klinkenbahn, Staukettenbahn oder Rollenbahn ausgebildet damit die Träger und/oder Platten auf der Transporteinrichtung ohne Positionsänderung auf der Transporteinrichtung transportierbar sind.

Der Träger ist insbesondere eine Palette oder ein Brett und kann stationär oder beweglich sein. Vorzugsweise umfasst die Plattenproduktionsanlage einen Bypasstransportweg zum Sortieren von Platten und einen Haupttransportweg zum Transportieren von Platten mit besonders guter Qualität, sodass Platten optimal sortiert und befördert werden können. Allgemein weist bevorzugt die Transporteinrichtung bzw. die Plattenproduktionsanlage wenigstens zwei Transportpfade für die zu transportierenden Platten auf.

Die Position des Trägers und/oder der Platten auf dem Träger ist bevorzugt beim Transport berücksichtigbar. Dabei können die Positionssignale eine absolute oder relative Position der Platten relativ zu dem Träger und/oder der Fördereinrichtung oder des Trägers relativ zur Fördereinrichtung bezeichnen bzw. auf eine solche hinweisen, sodass exakte Positionen der Platten an die Robotereinrichtung sendbar sind. Idealerweise sind durch die Bildaufnahmeeinrichtung Positionssignale und/oder ein Bild der Platten bzw. ein Bild des Trägers mit darauf angeordneten Platten erzeug- und sendbar. Durch die Bildaufnahmeeinrichtung ist somit ein ortsaufgelöstes Bild einzelner oder mehrerer Platten auf einem Träger und/oder der Transporteinrichtung erfassbar.

Vorzugsweise ist das Bild gemeinsam mit einer Positionsangabe ausgebbar. Es ist denkbar, dass die Bildaufnahmeeinrichtung als Flächenfarbkamera, Linienscan- oder Punktkamera, vorzugsweise auf Basis eines CCD oder CMOS Sensors ausgebildet ist bzw. derartige Kameras aufweist. Denkbar sind allerdings auch Empfangseinrichtungen von Schall- oder elektromagnetischen Wellen, sowie auch Lichtsensoren. Weiterhin ist es möglich, dass die Bildaufnahmeeinrichtung mehrere Kameras, vorzugsweise unterschiedliche Kameras aufweist, sodass eine vollautomatische Kontrolle der Platten möglich ist. Dabei sind insbesondere Geometrie, Farbe, Oberfläche, Risse und/oder eine Kornverteilung automatisch erfass- und/oder bewertbar. Vorzugsweise wird die Kontrolle jedoch von einer Person übernommen um eine besonders zuverlässige und individuelle Kontrolle zu garantieren. Dabei ist die Kontrolle durch die Person mittels der Kontrolleinrichtung, und insbesondere Mittels des Kontrollstabes durchführbar.

Dabei ist es möglich, dass die Vorrichtung eine Vergleichseinrichtung aufweist, welche aufgenommene Bilder mit (insbesondere in einer Speichereinrichtung abgespeicherten) Referenzbildern vergleicht, um so eine Aussage über die Qualität der Platten zu treffen.

Erfindungsgemäß weist die Kontrolleinrichtung zusätzlich oder alternativ zu dem Kontrollstab mindestens eine erste Betätigungseinrichtung zum Senden eines ersten Signals auf, durch welches eine Bildaufnahme, insbesondere wenigstens einer Platte durch die Bildaufnahmeeinrichtung auslösbar ist. Hierbei handelt es sich insbesondere um eine Momentaufnahme zumindest eines Teils oder der gesamten Platte und/oder des Trägers und der darauf angeordneten Platten. Wenn die Momentaufnahme den gesamten Träger mit den darauf angeordneten Platten umfasst, sind die Positionssignale besonders gut ermittelbar, sodass die Position einer markierten Platte relativ zu anderen, insbesondere nicht markierten Platten erfassbar ist.

Bevorzugt ist diese Bildaufnahme während des Transports der Platten d.h. während einer Bewegung der Platten durchführbar.

Es ist denkbar, dass die Betätigungseinrichtung als eine mechanische Einrichtung zum Herstellen eines Kontaktes ausgebildet ist, bspw. als Knopf, Druckknopf, Schiebeknopf, Schiebeelement, Wipp-Taster, Pilztaster oder dergleichen. Möglich ist auch eine elektronische Einrichtung, wie bspw. ein berührungslos arbeitender Sensor, insbesondere ein kapazitiv arbeitender Sensor oder ein Infrarotsensor.

Es ist weiterhin vorteilhaft, wenn die Kontrolleinrichtung mehr Betätigungseinrichtungen, jedoch mindestens eine zweite und/oder eine dritte Betätigungseinrichtung zum Senden eines zweiten und/oder dritten Signals umfasst, durch welche/s eine Bildaufnahme durch die Bildaufnahmeeinrichtung auslösbar ist. Dankbar ist, dass die zweite und/oder dritte Betätigungseinrichtung auch als eine der oben genannten Einrichtungen ausgebildet ist. Durch mehrere Betätigungseinrichtungen sind bevorzugt verschiedene Signale erzeugbar. Dadurch ist es beispielsweise möglich Platten unterschiedlicher Qualität zu markieren und diese Positionen an die Robotereinrichtung weiterzugeben.

So kann beispielsweise die erste Betätigungseinrichtung mit der Ausgabe eines Signals verknüpft sein, welches zur Kennzeichnung von Platten mit mittlerer Qualität dient und die zweite Betätigungseinrichtung mit der Ausgabe eines Signals verknüpf sein, welches zur Kennzeichnung von Platten schlechter Qualität bzw. von Ausschussware dient,

Auf diese Weise können Platten mit einer A-Qualität und Platten mit einer B- und/oder C-Qualität markiert bzw. deren Positionen auf dem Träger markiert werden. Dabei kann beispielsweise die erste oder zweite Betätigungseinrichtung zum Markieren von Platten mit A- oder B-Qualität ausgebildet sein und die dritte Betätigungseinrichtung zum Markieren von Platten mit C-Qualität. Es ist auch denkbar, dass wenigstens eine der Betätigungseinrichtungen dafür geeignet und bestimmt ist eine Bewegung der Fördereinrichtung zu starten und/oder zu stoppen, oder eine Markierung zu korrigieren. Allerdings ist es auch möglich, dass die Kontrollstation eine derartige Betätigungseinrichtung aufweist.

Erfindungsgemäß weist die Kontrolleinrichtung einen Betätigungsbereich aufweist, an dem die Betätigungseinrichtung/en angeordnet ist/sind und ein vorderes Ende, welches dazu geeignet und bestimmt ist eine Position einer Platte auf einem Träger digital zu erfassen. Idealerweise ist der Betätigungsbereich als Griffbereich ausgebildet, wobei der Griffbereich grade oder gebogen sein kann. Das vordere Ende der Kontrolleinrichtung bzw. des Kontrollstabes umfasst vorzugsweise eine speziell ausgebildete Form und/oder Farbe, die sich von der Form und/oder Farbe der Platten in besonderer Weise abhebt. Dies bedeutet, dass das vordere Ende beispielsweise als Spitze oder Kugel, Halbkugel oder Dreieck oder dergleichen ausgebildet ist.

Es ist jedoch auch denkbar, dass auch die Erfassung fehlerhafter Platten automatisch erfolgt, etwa dadurch, dass die Kontrolleinrichtung automatisch ausgebildet ist und laufend wenigstens einige und bevorzugt sämtliche Platten überwacht und im Bedarfsfall Platten abweichender Qualität identifiziert. So kann beispielsweise die Bildaufnahmeeinrichtung laufend Bilder der Platten aufnehmen und bei Feststellen einzelner Fehlerhafter Platten diese und/oder deren Position identifizieren.

So könnte etwa ein Gesamtbild einer Vielzahl von Platten in einem Bildaufnahmebereich aufgenommen werden und dieses Bild mit einem Sollbild oder Referenzbild verglichen werden. Falls sich aus diesem Vergleich ergibt, dass einzelne Platten in bestimmter Weise von einer Sollbeschaffenheit abweichen, kann eine Auswerteeinrichtung diese Platten identifizieren und/oder deren Position innerhalb eines Plattenstroms. Die Robotereinrichtung kann dann diese Platte aus dem Transportstrom entnehmen.

Besonders bevorzugt ist es, wenn das vordere Ende eine spezielle Farbe aufweist, die von der Bildaufnahmeeinrichtung besonders gut erfassbar ist, oder eine Farbe oder ein Muster aufweist, auf die/das die Bildaufnahmeeinrichtung geeicht ist. Dies kann mindestens eine der Farben Blau, Rot, Gelb, Grün, Violett, Orange, Braun, oder auch Schwarz oder Weiß sein. Ebenso ist es möglich, dass das vordere Ende ein Muster, einer oder mehrerer Farben aufweist, bspw. gepunktet, gestreift oder kariert. Vorzugsweise ist das vordere Ende in seinen Abmessungen kleiner, als eine der Platte, die sich aus der Plattenlänge und -Breite ergibt. Dies bedeutet, dass das vordere Ende der Kontrolleinrichtung vollständig in einer Platte platzierbar ist. Das vordere Ende kann aber auch einen Signalgeber zum Senden eines Ortssignals, beispielsweise in Form einer Abgabe von Schall- oder elektromagnetischen Wellen, oder Licht aufweisen. Durch besondere Farben und/oder spezielle Ortssignale kann die Bildaufnahmeeinrichtung eine ortsaufgelöste Position bestimmter Platten zuverlässig erfassen und als Positionssignal an die Robotereinrichtung senden.

In einer weiteren Ausführungsform weist die Plattenproduktionsanlage eine Empfangseinrichtung zum Empfangen der Positionssignale, eine Steuereinrichtung und/oder eine Auswerteeinrichtung zum Auswerten der Signale auf. Durch die Auswerteeinrichtung sind eine Auswertung der/des Signale/s durchführbar und Positionsdaten von Platten auf einem Träger ermittelbar. Durch diese Einrichtungen sind in der Plattenproduktionsanlage Plattenparameter und/oder Trägerparameter speicherbar. Diese Parameter können beispielsweise, die Plattenlänge, Plattenbreite, Plattenhöhe, eine Anzahl von Platten auf einem Träger, eine Trägergröße, eine Ausrichtung und/oder Lage der Platten auf dem Träger sein. Dadurch ist die Plattenproduktionsanlage in der Lage automatisch Fehlausrichtungen von Platten, sowie eine Form und die Anzahl von Platten zu erfassen und mit gespeicherten Parametern zu vergleichen, wodurch insbesondere fehlerhafte Platten schnell aussortiert werden können bzw. der Transport schnell an eine individuelle Situation angepasst werden kann.

Es ist auch vorteilhaft, wenn die Sortiereinrichtung einen Roboterarm zum Aufgreifen und Ablegen einer Platte aufweist. Vorzugsweise weist der Roboterarm eine Saug und/oder Greifvorrichtung zum Aufgreifen und/oder Ablegen einer Platte auf. Auf diese Weise kann der Roboterarm auch Platten unterschiedlicher Formen aufgreifen. Es ist möglich, dass der Roboterarm mindestens ein Gelenk, vorzugsweise jedoch zwei oder mehr Gelenke aufweist und insbesondere auch eine Rotationsvorrichtung zum rotieren des Armes. Dabei könnten ein Gelenk am Sockel des Roboterarmes und/oder ein weiteres Gelenk an einer Greif- bzw. Saugvorrichtung angeordnet sein. Dadurch ist der Roboterarm in alle Raumrichtungen bewegbar. Idealerweise weist der Roboterarm auch eine Vorrichtung zur Erfassung von Referenzpunkten auf, sodass der Roboterarm direkt bestimmte Platten aufgreifen und an bestimmten Orten ablegen kann.

In einer bevorzugten Ausführungsform sind auf Basis der Positionsdaten markierte Platten durch den Roboterarm automatisch aufgreifbar und ablegbar. Weiterhin ist bevorzugt der Roboterarm in der Lage leere Träger zu erkennen. Dadurch kann der Roboterarm einen Träger auch komplett leeräumen sowie seine Bewegung automatisch stoppen, sobald auf einem Träger keine Platten mehr liegen.

Vorteilhaft ist es, wenn auf Basis der Positionsdaten markierte Platten durch den Roboterarm automatisch voneinander trennbar sind. Vorzugsweise weist die Sortiereinrichtung mindestens einen, jedoch bevorzugt zwei, drei, vier oder mehr Sortierplätze auf, wobei diese Sortierplätze insbesondere Ablageträger bspw. Paletten oder Bretter und/oder mindestens einen Behälter für Ausschussplatten aufweisen.

Daher sind die Platten in verschiedene Bereiche bzw. Sortierplätze ablegbar. Dabei umfasst bevorzugt wenigstens ein Sortierplatz einen Ausschussbereich, bevorzugt mit einem Behälter für Ausschussplatten sowie vorzugsweise auch einen Sortierplatz mit einem Träger zum Rückführen zum Weitertransport. Zudem ist bevorzugt auch ein Sortierplatz in Form eines Pufferbereichs vorgesehen, in den Platten überführbar sind, um sie wieder einem Produktionsstrom zuzuführen. Auf diese Weise können Platten unterschiedlicher Qualität getrennt werden um sie entsprechend ihrer Qualität dem weiteren Vorgehen zuzuordnen.

Daneben kann dieser Pufferbereich auch als Pufferstrecke ausgeführt sein. Diese Pufferstrecke dient insbesondere dazu um Zeitdifferenzen im Sortierprozess zu kompensieren. Auf diese Weise kann die Anlage ohne Produktionsunterbrechung weiter arbeiten. Diese Pufferstrecke und/oder der Pufferbereich kann dabei eine variable Anzahl von Platten aufnehmen.

In einer weiteren Ausführungsform weist die Kontrollstation eine Beleuchtungseinrichtung auf. Es ist auch denkbar, dass die Kontrollstation zwei oder mehr Beleuchtungseinrichtungen aufweist. Vorzugsweise sind die Beleuchtungseinrichtungen unabhängig voneinander ansteuerbar bzw. schaltbar, sodass beispielsweise nur eine von zwei Beleuchtungseinrichtungen, oder beide angeschaltet betrieben werden können.

Dabei dienen die Beleuchtungseinrichtungen zum Beleuchten der Platten. Idealerweise sind die Beleuchtungseinrichtungen in Vertikalrichtung unterhalb der Bildaufnahmeeinrichtung angeordnet. d.h. ein Abstand der Beleuchtungseinrichtung/en zur Transporteinrichtung ist kleiner, als ein Abstand der Bildaufnahmeeinrichtung zur Transporteinrichtung. Dadurch können die Platten besonders gut beleuchtet werden und die Bildaufnahmeeinrichtung wirft keinen Schatten. Es ist auch denkbar, dass die Beleuchtungseinrichtungen genormtes Licht, bspw. Tageslicht und/oder UV-Licht auf die Platten bzw. den Träger werfen, sodass dauerhaft alle Platten unter denselben Bedingungen kontrolliert werden können. Dabei können bevorzugt die Beleuchtungseinrichtungen sowohl diffuse Strahlung als auch gerichtete Strahlung ausgeben.

In einer Ausführungsform weist die Plattenproduktionsanlage ein Gestell zum Halten der Bildaufnahmeeinrichtung und/oder der Beleuchtungseinrichtung auf. Das Gestell sorgt dafür, dass die Bildaufnahmeeinrichtung und/oder die Beleuchtungseinrichtung dauerhaft und stabil oberhalb der Transporteinrichtung oder allgemein in einer vorgegebenen Position gehalten werden. Vorzugsweise weist das Gestell eine Montageplatte zum Anbringen der Bildaufnahmeeinrichtung und/oder der Beleuchtungseinrichtung auf, wobei eine Montagefläche der Montageplatte bevorzugt zumindest teilweise parallel zur und/oder gegenüber einer Trägerfläche bzw. Transportfläche angeordnet ist. Dadurch können die Platten gleichmäßig und ohne Schattenwurf ausgeleuchtet werden, sowie Bilder einer Aufsicht der Träger bzw. Platten aufgenommen werden. Dabei ist die Bildaufnahmeeinrichtung bzw. die Kamera auf die Transporteinrichtung synchronisiert und/oder kennt Transportdaten der Transporteinrichtung.

Vorteilhaft ist es, wenn die Bildaufnahmeeinrichtung und/oder die Beleuchtungseinrichtung die Fördereinrichtung in einer Distanz entlang der Vertikalrichtung beabstandet und derart angeordnet ist, dass durch die Bildaufnahmeeinrichtung alle auf einem Träger befindlichen Platten vollständig erfassbar sind und/oder alle auf einem Träger befindlichen Platten vollständig und/oder gleichmäßig durch die Beleuchtungseinrichtung beleuchtbar sind. Die Bildaufnahmeeinrichtung und/oder die Beleuchtungseinrichtung sind jedoch bevorzugt zumindest in einer Querrichtung zu der Förderrichtung von der Transportfläche beabstandet.

In einer weiteren vorteilhaften Ausführungsform weist die Plattenproduktionsanlage eine Hubstation auf. Idealerweise ist die Hubstation an einem Sortierplatz angeordnet. Die Hubstation ist vorzugsweise derart ausgebildet, dass ein leerer Träger und/oder ein Träger mit darauf angeordneten Platten von einem Sortierplatz anhebbar und auf den Haupttransportweg verschiebbar sind. Es ist allerdings auch möglich, dass Träger an zwei oder mehreren Sortierplätzen durch Hubstationen anhebbar und/oder verschiebbar sind. Dadurch kann ein Träger mit Platten vom Sortierplatz zurück auf den Haupttransportweg befördert werden um die Platten dem weiteren Verfahren zuzuführen.

Bei einer weiteren bevorzugten Ausführungsform erlaubt die Plattenproduktionsanlage eine vollautomatisierte Sortierung der Platten, Bevorzugt können dabei nicht nur fehlerhafte Platten erkannt werden sondern diese werden vollautomatisch entnommen und bevorzugt auch durch diese Entnahme erzeugte Lücken bzw. Leerstellen wieder aufgefüllt.

Bei einer weiteren bevorzugten Ausführungsform ist die Plattenproduktionsanlage als selbstlernendes System ausgestaltet. Dies bedeutet, dass beispielsweise die Kriterien, nach welchen Platten auszusortieren sind durch die Anlage selbst eingelernt oder angepasst werden. So kann beispielsweise die Anlage eine Datenbank mit Darstellungen von Platten anlegen, die beispielsweise als Referenz für fehlerfreie Platten, oder auch für B-Ware verwendet werden.

Die Aufgabe wird auch durch ein Verfahren zum Sortieren von Platten mittels einer Plattenproduktionsanlage zur Produktion von Stein- und Betonplatten gelöst. Die Plattenproduktionsanlage erstreckt sich in eine Längsrichtung, eine Querrichtung und eine Vertikalrichtung. Die Plattenproduktionsanlage weist eine Fördereinrichtung welche die Platten in einer vorgegebenen Förderrichtung transportiert, eine Kontrollstation und eine Sortiereinrichtung mit mindestens einer Robotereinrichtung zum Sortieren von Platten auf. Die Kontrollstation ist (wenigstens zeitweise) datentechnisch mit der Sortiereinrichtung verbunden. Die Kontrollstation weist eine Kontrolleinrichtung zum Markieren einer Platte und eine Bildaufnahmeeinrichtung zum Erzeugen von Positionssignalen auf, welche an die Robotereinrichtung sendbar sind. Das Verfahren umfasst die Schritte:
a. Markieren einer Platte mit der Kontrolleinrichtung,
b. Erzeugen wenigstens eines Positionssignals,
c. Automatisches aufgreifen einer markierten Platte durch die Robotereinrichtung auf Basis des Positionssignals,
d. Automatisches Ablegen einer markierten Platte auf einer Ablagepalette durch die Robotereinrichtung.

Vorzugsweise ist die Plattenproduktionsanlage wie oben beschrieben ausgebildet. In einem ersten Schritt wird eine Platte mit der Kontrolleinrichtung markiert. Dies wird vorzugsweise durch eine Person vorgenommen, welche die Kontrolleinrichtung in Form des Kontrollstabes hält. Die Markierung kann jedoch auch automatisch erfolgen. Dabei wird ein vorderes Ende der Kontrolleinrichtung auf, oder zumindest oberhalb der zu markierenden Platte gehalten und zwar insbesondere so, dass das komplette vordere Ende auf einer zu bewertenden Fläche der Platte, d.h. möglichst mittig auf bzw. über diese Fläche liegt. Das bedeutet, dass das vordere Ende ganzflächig innerhalb der Kontur der Platte liegt. Auf diese Weise kann ein zuverlässiges Positionssignal erzeugt werden.

Bei einem weiteren bevorzugten Verfahren werden Leerstellen mit weiteren Platten aufgefüllt. Dabei kann es sich insbesondere um solche Leerstellen handeln, welche durch die Wegnahme von bestimmten Platten, insbesondere von Platten schlechter Qualität entstanden sind. Bevorzugt werden diese Leerstellen mit fehlerfreien Platten befüllt, um so vollständig fehlerfreie Träger zu erhalten. Diese fehlerfreien Platten können dabei etwa einem Vorrat entnommen werden.

Es ist vorteilhaft, wenn die Position eines vorderen Endes der Kontrolleinrichtung (ebenfalls) erfasst wird und diese Position die Basis des Positionssignals bildet. Dadurch kann die Position der markierten Platte ortsaufgelöst erfasst werden, wodurch diese in einem späteren Verfahrensschritt zuverlässiger ansteuerbar ist.

Ein nächster, insbesondere zweiter Verfahrensschritt sieht vor, ein Positionssignal zu erzeugen. Vorzugsweise wird im selben Schritt auch eine Qualitätsinformation erzeugt. Dies geschieht vorteilhafterweise, wenn durch Betätigen einer Betätigungseinrichtung an der Kontrolleinrichtung bzw. dem Kontrollstab eine Bildaufnahme durch die Bildaufnahmeeinrichtung ausgelöst wird. Dabei wird idealerweise eine Betätigungseinrichtung, insbesondere in Form eines Wipp-Tasters betätigt.

Dadurch wird ein Aufnahmesignal, insbesondere zusammen mit der Qualitätsinformation durch die Kontrolleinrichtung erzeugt. Dieses Aufnahmesignal wird in einem weiteren Verfahrensschritt von der Bildaufnahmeeinrichtung erfasst, wodurch diese auslöst und ein Bild, insbesondere eine Momentaufnahme von zumindest einem Ausschnitt des Trägers mit den Platten und/oder einzelner Platten erzeugt. Auf diese Weise können mehrere Bilder bzw. Momentaufnahmen erzeugt werden, wobei auf jedem Bild eine andere Platte markiert sein kann. Dadurch ist es möglich für jede markierte Platte ein individuelles Positionssignal zu erzeugen. Dabei kann bevorzugt der Benutzer durch Auswahl einer entsprechenden Betätigungseinrichtung auswählen, welche Qualitätsstufe er einer bestimmten Platte zuordnen will. Durch das Deuten auf diese Platten mit der Kontrolleinrichtung wird bevorzugt diese Platte identifiziert.

In einem nächsten, insbesondere dritten Verfahrensschritt wird wenigstens ein, vorzugsweise mehrere Positionssignale und insbesondere individuelle Positionssignale erzeugt. Dabei werden die zuvor erzeugten Bilder bzw. Momentaufnahmen als Positionssignale an die Empfangseinrichtung gesendet. Diese Positionssignale werden in einem Zwischenschritt an die Auswerteeinrichtung weitergeleitet.

Es ist vorteilhaft, wenn die Auswerteeinheit auf Basis des Positionssignals Positionsdaten ermittelt. Die an die Auswerteeinheit übermittelten Positionssignale in Form von Bildern werden in der Auswerteinheit verarbeitet und auf Basis der Position des vorderen Endes der Kontrolleinrichtung bzw. des Kontrollstabes insbesondere gegenüber von Längs- und Querkanten des Trägers ausgewertet. Das Bedeutet, dass die Position des vorderen Endes gegenüber von Referenzpunkten als Basis eines Positionssignals dient. Dabei wird das Bild von der Auswerteinheit vorzugsweise zunächst nach der im System geeichten Farbe des vorderen Endes gescannt.

Danach folgt eine Berechnung, vorzugsweise anhand eines Zentrums des Farbbereichs der geeichten Farbe innerhalb des Bildes bzw. eines Abstandes des Zentrums zu den Referenzpunkten, insbesondere der Trägerkanten. Die von der Auswerteinheit ermittelte Position des Zentrums des Farbbereichs gegenüber den Referenzpunkten wird vorzugsweise zusammen mit der Qualitätsinformation als Positionsdaten an die Robotereinrichtung bzw. den Roboterarm weitergeleitet. Idealerweise erfolgt diese Vorgehensweise individuell für jede markierte Platte. Idealerweise werden die ermittelten Positionsdaten, also spezielle X- und Y-Werte im Falle einer Ausrichtungsänderung des Trägers während des Transports konvertiert sodass der Roboter auch nach einer Ausrichtungsänderung die markierten Platten aufgreifen kann.

In einem weiteren Zwischenschritt wird nun durch eine Betätigung einer Betätigungseinrichtung an der Kontrolleinrichtung oder der Kontrollstation die Fördereinrichtung bzw. der Träger und/oder die Platte zum Weitertransport in Bewegung versetzt. Vorzugsweise wird der Träger und/oder die Platte über die Transporteinrichtung, insbesondere über eine Stauketten- und/oder Rollenbahn bzw. über den Bypasstransportweg zur Sortierstation befördert.

In einem weiteren Verfahrensschritt wird bzw. werden markierte Platten durch die Robotereinrichtung automatisch, und auf Basis der Positionssignale bzw. der Positionsdaten und insbesondere auch auf Basis der Qualitätsinformation aufgegriffen. Hierzu bewegt sich die Greif- oder Saugvorrichtung des Roboterarmes in Richtung einer markierten Platte und greift diese automatisch. Vorzugsweise wird die aufgegriffene Platte danach in einem nächsten Schritt auf Basis der Qualitätsinformation an einem Sortierplatz, insbesondere auf einem Träger oder in einem Behälter abgelegt. Dies kann der Ausschussbereich mit dem Behälter für Ausschussplatten sowie der Sortierplatz mit einem Träger zum Rückführen zum Weitertransport oder der Pufferbereich sein.

Die Anweisung an den Roboter erfolgt also durch eine zuvor erfolgte Kontrolle mittels einem Kamerabild und einem stabähnlichen Element, welches auf die auszusortierenden Platten zeigt. Es werden mit anderen Worten innerhalb der Kontrollstation einzelne Platten, die beispielsweise auf einer Palette angeordnet sind, von einer Person in ihrer Qualität kontrolliert und zeitgleich mit geringem Zeitaufwand mittels eines Zeigestabs bzw. dem Kontrollstab beziehungsweise einem Stabelement angetippt, beziehungsweise auf eine jeweilige Platte gezeigt. Im Moment des Daraufzeigens wird ein Knopf bzw. eine Betätigungseinrichtung von dem Bediener, zum Beispiel am Ende dieses Stabes gedrückt, so dass eine Momentaufnahme bzw. Bild, mithilfe einer darüber angeordneten Kamera, die jeweilige Platte bildlich festhält und als Positionssignale an die Robotereinrichtung zum Aussortieren der jeweiligen Platte weitergibt. Im Einzelnen wird die Erfindung anhand der beiliegenden Figuren erklärt:
Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigt:
- Fig. 1: Eine schematische Plattenproduktionsanlage mit Kontrollstation und Sortierstation.
- Fig. 2: Schematische Ansicht eines Kontrollstabes;
- Fig. 3: ein Ablaufdiagram.

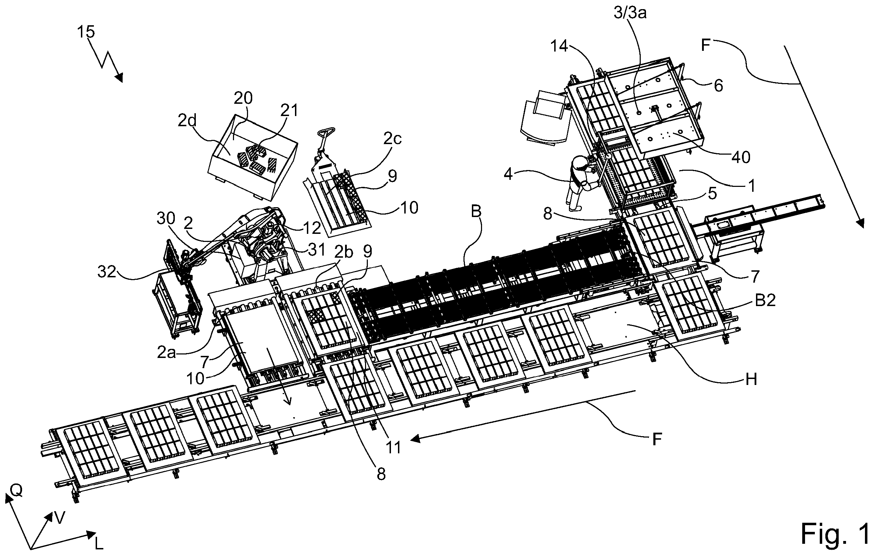

Figur 1 zeigt eine Plattenproduktionsanlage mit einer Kontrollstation 1 und einer Sortierstation 2. Die Kontrollstation 1 weist von oben betrachtet eine flächig ausgebildete Beleuchtungseinrichtung 3 mit mindestens einer Kamera auf, wobei die Kamera eine darunterliegende Platte (8, 9) oder auch mehrere Platten (8, 9) bzw. die Position eines Zeigestabes bzw. einer Kontrolleinrichtung in Form eines Kontrollstabes (14) eines Bedieners 4 aufnehmen kann.

Die Plattenproduktionsanlage 15 erstreckt sich in eine Längsrichtung L, eine Querrichtung Q und eine Vertikalrichtung V und weist weiterhin einen Haupttransportweg (H) und einen Bypasstransportweg (B) auf, wobei die Kontrollstation 1 in einer Förderrichtung F vor dem Bypasstransportweg B angeordnet ist. Dazu ist ein Zugang B2 zum Bypasstransportweg B zwischen der Kontrollstation 1 und dem Haupttransportweg H angeordnet, sodass Träger 7 mit Platten guter Qualität 8 direkt auf den Haupttransportweg H geleitet werden können und Träger 7 mit fehlerhaften Platten 9 auf den Bypasstransportweg B geleitet werden können. Idealerweise verläuft der Bypasstransportweg B und/oder der Haupttransportweg H in grader Linie und insbesondere sind der Bypasstransportweg B und der Haupttransportweg H parallel zueinander angeordnet.

Vorzugsweise erstreckt sich der Bypasstransportweg B vom Zugang B2 zum Bypasstransportweg B bis zu der Sortierstation 2. Dabei weist die Sortierstation wenigsten zwei, insbesondere aber drei, vier oder mehr Sortierplätze 2a, 2b, 2c, 2d auf. Dabei ist es möglich, dass ein erster Sortierplatz 2a als Pufferbereich festgelegt ist, der einen Träger 7 als Ablage für Platten guter Qualität bspw. A-Qualität aufnehmen kann, ein zweiter Sortierplatz 2b für einen von der Kontrollstation 1 ankommenden Träger 7 mit Platten vorgesehen ist, ein dritter Sortierplatz 2c für Träger 7 mit fehlerhaften Platten 9 bspw. mit B-Qualität vorgesehen ist, welcher vorzugsweise eine Palette 10 als Träger aufweist, und/oder ein Sortierplatz 2d als Ausschussbereich festgelegt ist, der idealerweise einen Behälter 20 für Ausschussware 21 umfasst.

Es ist denkbar, dass mindestens zwei Sortierplätze 2a, 2b in Förderrichtung hintereinander angeordnet sind und insbesondere derart, dass Träger 7 mit Platten 8, 9 von dem Bypasstransportweg B auf mindestens einen Sortierplatz 2a, 2b beförderbar sind. Idealerweise sind die Träger 7 mit Platten 8, 9 durch eine Fördereinrichtung 5 von einem auf einen anderen Sortierplatz 2a, 2b beförderbar. Dabei umfasst die Fördereinrichtung 5 die Kontrollstation 1, den Haupttransportweg H und/oder den Bypasstransportweg B und ist als Klinkenbahn, Staukettenbahn und/oder Rollenbahn ausgebildet.

Vorzugsweise ist die Fördereinrichtung 5 in einem Bereich der Kontrollstation 1 und/oder des Haupttransportweges H als Klinkenbahn, in einem Bereich des Bypasstransportweges B als Staukettenbahn und/oder in einem Bereich der Sortierstation 2 als Rollenbahn ausgebildet. Vorzugsweise ist eine Hubstation an einem, besser zwei Sortierplätzen 2a, 2b angeordnet, sodass Träger 7 von den Sortierplätzen 2a, 2b durch eine Hubstation, insbesondere in Querrichtung Q auf den Haupttransportweg H beförderbar sind, durch den die Träger 7 vorzugsweise in Längsrichtung beförderbar sind. Zudem kann mindestens ein Sortierplatz 2a, 2b, vorzugsweise zwei Sortierplätze und/oder der Zugang zum Bypasstransportweg B2 einen Trägerschieber aufweisen, mit dem Träger und/oder Platten in Förderrichtung oder senkrecht zur Förderrichtung F verschiebbar sind. Dabei sind die Träger vorzugsweise als Brett oder Palette 7, 10, 11 ausgebildet.

Die Sortierplätze 2a, 2b, 2c, 2d sind an der Sortierstation 2 angeordnet, wobei die Sortierstation vorzugsweise einen Roboter 12 in Form eines Roboterarmes aufweist. Dabei ist der Roboterarm auf einem Sockelmodul 30 angeordnet und weist wenigsten ein Gelenk, idealerweise jedoch zwei oder drei Gelenke und insbesondere auch eine Rotationsvorrichtung 31 auf, wodurch der Roboterarm 12 in alle Raumrichtungen beweglich ist.

Es ist vorteilhaft vorgesehen, dass die Rotationsvorrichtung 31 statisch an dem Sockelmodul 30 angeordnet ist, wobei das Sockelmodul 30 selbst idealerweise über Räder verfügt, sodass der Roboter 12 bewegbar und ortsunabhängig einsetzbar ist. Weiterhin ist an dem Roboterarm 12 eine Saug- und/oder Greifvorrichtung 32 zum Aufgreifen von Platten 8, 9 vorgesehen. Durch die Rotationsvorrichtung 31 und die Gelenke ist der Roboterarm 12 in der Lage, Platten 8, 9 von jedem Sortierplatz 2a, 2b, 2c, 2d aufzugreifen und/oder abzulegen.

Die Kontrollstation 1 umfasst neben dem Kontrollstab 14 auch ein Gestell 6, welches idealerweise als Halterung für mindestens eine, vorzugsweise zwei oder mehr Beleuchtungseinrichtungen 3 und mindestens eine, vorzugsweise zwei oder mehr Bildaufnahmeeinrichtungen 3a ausgebildet ist. Die Bildaufnahmeeinrichtung umfasst vorzugsweise mindestens eine Kamera, die idealerweise als Flächenfarbkamera, Flächenkamera, Linienscan- oder Punktkamera, vorzugsweise auf Basis eines CCD oder CMOS Sensors ausgebildet ist. Die Beleuchtungseinrichtungen 3 sind dafür geeignet und bestimmt dauerhaft definiertes Licht auf die Träger 7 bzw. die Platten 8, 9 zu werfen um eine zuverlässige Kontrolle zu ermöglichen.

Anstelle des Benutzers 4 und des Kontrollstabs kann jedoch auch die Identifizierung fehlerhafter Platten automatisch erfolgen und auch deren Position automatisch bestimmt werden.

Idealerweise sind die Beleuchtungseinrichtungen 3 und/oder die Bildaufnahmeeinrichtungen 3a derart angeordnet, dass sie die Träger 7 vollständig ausleuchten bzw. bildlich erfassen können. Insbesondere sind die Beleuchtungseinrichtungen 3 und/oder die Bildaufnahmeeinrichtungen 3a in Vertikalrichtung V unterhalb einer Dachplatte 40 des Gestells 6 angeordnet, wobei die Beleuchtungseinrichtung 3 vorzugsweise in Vertikalrichtung V unterhalb der Bildaufnahmeeinrichtung 3a, also die Bildaufnahmeeinrichtung 3a zwischen der Dachplatte 40 und der Beleuchtungseinrichtung 3 angeordnet ist.

Die Plattenproduktionsanlage 15 weist zudem eine Kontrolleinrichtung 14, vorzugsweise in Form eines Kontrollstabes bzw. eines Zeigestabs auf. Der Kontrollstab 14 umfasst ein vorderes Ende und ein hinteres Ende, welches von einem Bediener 4 an einem Griffbereich gehalten werden kann.

Sobald eine Kontrolle von Seiten des Bedieners 4 durchgeführt worden ist, wird auf der Fördereinrichtung 5 in Form eines Förderbands 5 oder dergleichen die kontrollierte Platte 8, 9 und ggf. mehrere Platten in Richtung Sortierstation 2 gefahren. Eine Halterung in Form eines Gestells 6 dient dazu, die Beleuchtungseinrichtung 3 mit der Kamera 3a und gegebenenfalls das Förderband 5 zu halten und zu positionieren.

Auf einem Träger, bzw. einer Palette 7, die zum Beispiel auf dem Förderband 5 insgesamt als Gesamtheit weiter transportiert werden kann, liegen mehrere Platten 8, 9, bei denen es gilt, diese anhand eines automatisierten Verfahrens mittels eines Roboters 12 auszusortieren. Hierbei werden die aussortierten Platten 9, sofern es sich beispielsweise um B-Ware handelt oder um Ausschussware 21 auf eine weiter zur Verfügung stehende Palette 11 mittels des Roboterarmes 12 abgelegt. Der Roboterarm des Roboters 12 kann natürlich hierfür schwenkend betätigt werden.

Ebenso kann der sich schwenkende Roboterarm 12 des Roboters 12 von einem weiteren Träger 10 Ersatzware, also beispielsweise Platten der A-Ware-Qualität von dem Träger 10 aufgreifen und die an den Stellen der aussortierten Platten auf der Palette 7 ablegen und somit die Lücken füllen.

Ein Bediener 4 hält im Arm einen Zeigestab bzw. den Kontrollstab 14, der dazu dient, die jeweilige Platte 8 auf einem Träger der unter der Beleuchtungseinrichtung 3 angeordnet ist, mit seinem vorderen Ende anzutippen, sofern es sich beispielsweise um B-Ware oder C-Ware handelt. Ebenso kann es sich um A-Ware handeln. Wichtig ist nur, dass der Bediener 4 eine jeweils zugehörige Betätigungseinrichtung in Form eines Knopfes an einem Griffbereich des Kontrollstabes 14 drückt. Dies bedeutet, dass wenn beispielsweise eine A-Ware angetippt wird, der Bediener zeitgleich einen A-Knopf drückt. Ebenso muss er bei einer B-Ware einen B-Knopf an der Rückseite des Kontrollstabes 14 drücken.

Sobald dieses Drücken eines Knopfes geschehen ist, findet eine Aufnahme durch eine darüber angeordnete Kamera 3a in der Beleuchtungseinrichtung 3 statt. Diese Aufnahme erfasst die Position des vorderen Endes des Kontrollstabes 14 und damit der jeweiligen Platte 8, 9. Durch das Drücken des richtigen Knopfes wird zeitgleich digital erfasst, ob es sich bei dieser momentan angetippten Platte zu dem jeweiligen Bild um eine A-Ware, B-Ware oder C-Ware handelt.

Bei einem sich anschließenden Weitertransport des Trägers auf der Fördereinrichtung 5 findet ein Übergang von der Kontrollposition über den Bypasstransportweg B in die Sortierposition statt. Der in dieser Sortierposition beziehungsweise in der Sortierstation 2 sich momentan befindende Träger 7 weist nun mehrere Platten 8, 9 der Kategorie A-Ware, B-Ware und/oder C-Ware auf.

Diese werden auf Basis ausgewerteter Positionssignale mittels einer Steuereinrichtung, die hier nicht näher dargestellt ist, und einer Auswerteeinrichtung die hier ebenso nicht näher dargestellt ist, von der Bildaufnahmeeinrichtung kommend und einer Empfangseinrichtung für das gesendete Signal des Kontrollstabes 14 kommend mittels des Roboters 12 aussortiert. Das heißt, der Roboter 12 weiß in diesem Moment automatisiert durch Übertragung und Auswertung der Daten bzw. Positionssignale genau, an welcher Stelle welche Platte welcher Kategorie liegt.

Dies führt dazu, dass der Roboterarm A-Ware, B-Ware und/oder C-Ware voneinander trennen kann und entsprechend ablegen kann. Dies kann beispielsweise dadurch passieren, dass er die B-Ware auf eine daneben angeordnete Palette 10 ablegt und neue Ersatzplatten von einem Träger 11 wieder aufgreift und damit die Lücken auf dem Träger 7, 11 füllt. Somit erreicht man vorteilhaft in kürzester Zeit und automatisiert und somit auch kosteneffektiv eine Aussortierung der schlechten Platten 9 und der Ausschussware 21. Selbstverständlich kann eine Aussortierung auch derart erfolgen, dass die A-Ware, also diejenigen Platten 8, die eine hohe Qualität haben, aussortiert werden und der Rest auf der Palette 10 liegen bleibt.

Im Detail wird eine Platte 8, 9 auf einem Träger 7 insbesondere auf einem Brett in der Kontrollstation 1 auf Basis bestimmter Qualitätsmerkmale, wie bspw. Geometrie, Farbe, Oberfläche, Risse und/oder eine Kornverteilung als A-Ware, B-Ware oder C-Ware markiert. Der Bediener zeigt mit dem Kontrollstab auf eine zu markierende Platte 8, 9 und löst vorzugsweise durch eine Betätigungseinrichtung an dem kontrollstab 14 ein Senden und Speichern von Positions- und Qualitätsinformationen aus, die in der Steuereinrichtung und Auswerteeinrichtung verarbeitet werden und als Positionsdaten an den Roboter 12 weitergegeben werden.

Im Anschluss daran, wird das Brett bzw. der Träger mit den Platten und mit diesen gespeicherten Informationen wird über den Bypasstransportweg B zur nächsten Station bzw. zur Sortierstation geschoben. Auf Basis der Positions- und Qualitätsinformationen greift der der Roboter 12 die markierten Platten 8, 9 von dem Brett auf dem Sortierplatz 2b. Platten, die als Ausschussware 21 und/oder als fehlerhafte Platten 9 markiert wurden, werden von dem Roboterarm 12 nun aufgegriffen und im Behälter für Ausschussware 20 und/oder auf dem Sortierplatz 2c für fehlerhafte Platten 9 vorzugsweise auf einer Palette 10 abgelegt.
Die auf dem Träger verbleibenden Platten 8 werden idealerweise samt Träger in den Pufferbereich auf Sortierplatz 2a verschoben, wo die Platten 8 optimalerweise als Pufferplatten verbleiben.

Sobald ein Träger 7 auf dem Sortierplatz 2b aufgrund des Aussortierens von Platten 9, 21 Leerstellen aufweist, wird eine Anzahl entnommener Platten 9 mit einer Anzahl von verbleibenden Platten 8 im Pufferbereich bzw. auf Sortierplatz 2a verglichen. Ist die Anzahl entnommener Platten größer, ist der Roboter 12 in der Lage, die Leerstellen am Sortierplatz 2b mit Platten 8 aus dem Pufferbereich aufzufüllen. Hierzu greift der Roboter 12 verbleibende Platten 8 aus dem Pufferbereich des Sortierplatzes 2a auf und legt diese in den entstandenen Leerstellen auf dem Träger 7 am Sortierplatz 2b ab.

Ist die Anzahl entnommener Steine kleiner, greift der Roboter 12 Ausschussware 21 und platziert diese in dem Behälter für Ausschussware des Sortierplatzes 2d. Anschließend, vergleicht der Roboter 12 erneut die Anzahl entnommener Platten 9, 21 mit einer Anzahl von verbleibenden Platten 8 im Pufferbereich und füllt die Leerstellen, wie zuvor beschrieben mit Platten 8 aus dem Pufferbereich auf. Vorzugsweise wird ein leergeräumter Träger und/oder ein voll mit Platten 8 aufgefüllter Träger anschließend, insbesondere durch eine Hubstation angehoben und idealerweise durch Trägerschieber an den Sortierplätzen 2a, 2b auf den Haupttransportweg H befördert.

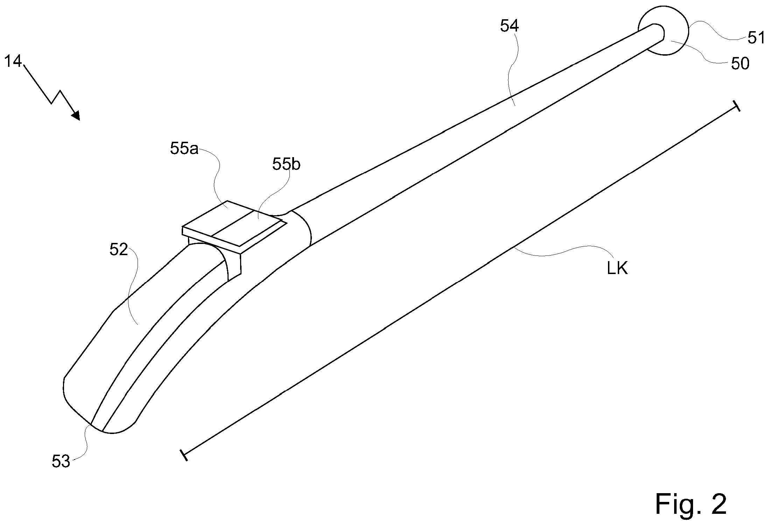

Figur 2 zeigt die Kontrolleinrichtung 14, welche vorzugsweise als Kontrollstab 14 oder Zeigestab ausgebildet ist und insbesondere von einem Benutzer bzw. Bediener 4 in der Hand haltbar ist. Der Kontrollstab 14 erstreckt sich idealweise hauptsächlich in eine Richtung und weist an einem vorderen Ende 51 eine spezielle Markierungsvorrichtung 50 auf. Diese Markierungsvorrichtung 50 ist derart ausgebildet, dass sie sich in besonderer Weise optisch von den Platten 8, 9 abhebt. Damit ist gemeint, dass die Markierungsvorrichtung 50 eine spezielle Form, Muster und/oder Farbe aufweist, welche sich von den Platten 8, 9 stark unterscheiden.

Da die Platten 8, 9 üblicherweise eher Grautöne aufweisen, sind für die Markierungsvorrichtung 50 kräftige Farben, bspw. Blau, Rot, Gelb, Grün, Violett, Orange, Braun vorgesehen. Es sind aber auch reines Weiß oder Schwarz möglich. Gleichfalls kann die Markierungsvorrichtung 50 auch speziell gemustert sein, bspw. in einem Streifenmuster, Punktmuster, Karomuster oder Wellenmuster. Eine spezielle ausgebildete Form der Markierungsvorrichtung 50 bspw. als Ball, Würfel, Zylinder, Kegel, Pfeil, Pyramide oder Halbkugel ist auch möglich.

Idealerweise ist ein Querschnitt der Markierungsvorrichtung 50 kleiner als eine zu bewertende Fläche der Platte 8, 9. Das bedeutet, dass der Querschnitt der Markierungsvorrichtung 50 innerhalb einer Außenkontur der zu markierenden Platte liegt. Es ist auch möglich, dass die Markierungsvorrichtung 50 wenigstens einen Signalgeber zum Senden eines Ortssignals, beispielsweise in Form einer Abgabe von Schall- oder elektromagnetischen Wellen, oder Licht aufweist.

Weiterhin weist der Kontrollstab 14 einen Griffbereich 52 an einem hinteren Ende 53 auf. Zwischen dem Griffbereich 52 und der Markierungsvorrichtung 50 ist ein Mittelbereich 54 angeordnet, der sich von dem Griffbereich 52 bis zur Markierungsvorrichtung 50 erstreckt. Zudem weist der Kontrollstab 14 wenigstens eine Betätigungseinrichtung 55a, 55b, idealerweise jedoch mindestens zwei oder drei Betätigungseinrichtungen 55a, 55b auf. Diese Betätigungseinrichtungen 55a, 55b sind dafür bestimmt und dienen zum Senden wenigstens eines ersten Signals an die Bildaufnahmeeinrichtung, durch die auf Basis des Signals ein Bild von dem Träger 7 erfassbar ist. Es ist vorgesehen, dass die Betätigungseinrichtungen 55a, 55b zwischen einem Griff am Griffbereich 52 und dem Mittelbereich angeordnet sind, nämlich insbesondere derart, dass sie mit einem Daumen oder Zeigefinger erreichbar sind, wenn der Kontrollstab in der Hand gehalten wird.

Vorzugsweise weist der Kontrollstab 14 zwei oder drei Betätigungseinrichtungen 55a, 55b auf, die als Wipp-Taster ausgebildet sind, wobei durch jeden Wipp-Taster 55a, 55b bis zu zwei unterschiedliche Signale erzeugbar sind. Das bedeutet, dass durch die Betätigungseinrichtungen 55a, 55b ein erstes, ein zweites, ein drittes und ein viertes Signal erzeugbar ist. Vorzugsweise enthält jedes Signal dabei mindestens eine, idealerweise jedoch zwei oder mehr Informationen, nämlich eine Qualitätsinformation der Platte 8, 9 und eine Aktionsaufforderung. Die Aktionsaufforderung kann bspw. das Stoppen oder Starten der Fördereinrichtung oder das Auslösen einer Bildaufnahme durch die Bildaufnahmeeinrichtung sein. Die Qualitätsinformation beinhaltet vorzugsweise eine Information über den Zustand bzw. der Qualität einer Platte 8, 9 nach dem Kontrollvorgang, bspw. A-Ware, B-Ware oder C-Ware.

Eine Länge LK des Kontrollstabes 14 ist vorzugsweise länger oder kürzer als eine Breite und/oder Länge des Trägers 7.

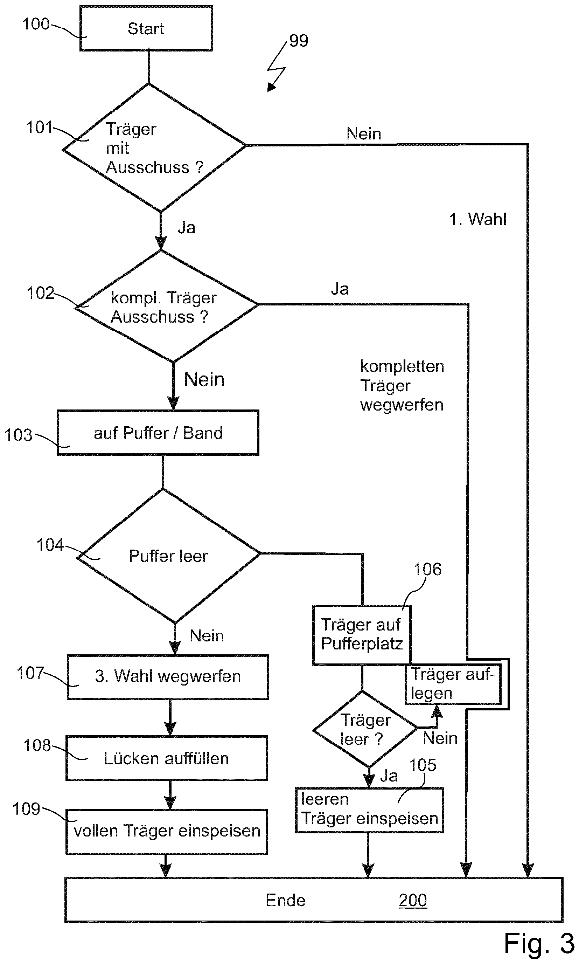

Figur 3 zeigt einen Sortiervorgang. Der Sortiervorgang 99 startet 100 vorzugsweise nachdem der Bediener 4 über eine Markierung keiner, einer, oder mehr Platten entschieden hat und/oder die Auswerteeinrichtung eine Auswertung des Bildes und/oder der Positionssignale vorgenommen hat. Ist auf einem Träger 7 keine Platte 8 markiert worden 101, wird dieser Träger 7 von der Kontrollstation 1 weiter auf den Haupttransportweg H befördert. Der Sortiervorgang 99 ist damit beendet 200.

Sind auf einem Träger alle darauf angeordneten Platten als Ausschussware 21 bzw. C-Ware markiert worden 102, wird dieser Träger 7 idealerweise auf den Bypasstransportweg B befördert, wo er anschließend zur Sortierstation 2 gelangt. Bevorzugt sortiert der Roboter 12 alle auf dem Träger 7 befindlichen Platten 21 in den Behälter 20 für Ausschussware 21. Dann wird der leere Träger 7 mittels der Hubstation von einem der Sortierplätze 2a, 2b auf den Haupttransportweg befördert. Der Sortiervorgang 99 ist damit beendet 200.

Ist auf einem Träger 7 mindestens eine Platte 9 als fehlerhafte Platte 9 oder Ausschussware 21 markiert worden 103, wird dieser Träger 7 vorzugsweise über den Bypasstransportweg B zum Sortierplatz 2b für ankommende Träger 7 befördert. Idealerweise wird dieser Träger 7 anschließend weiter zum Sortierplatz 2b für ankommende Träger 7 geleitet. Am Sortierplatz 2b greift der Roboter 12 alle markierten Platten 9, 21 und legt sie nacheinander und /oder entsprechend der Qualitätsinformation in dem Sortierplatz 2c für fehlerhafte Platten 9 oder im Ausschussbereich 2d ab 107.

Ist auf dem am Sortierplatz 2b befindliche Träger 7 noch mindestens eine Platte 8 mit guter Qualität angeordnet, wird der Träger 7 auf den Sortierplatz 2a im Pufferbereich 2a befördert 106. Befindet sich anschließend ein weiterer Träger 7 auf dem Sortierplatz 2b für ankommende Träger 7 und ist auf diesem Träger 7 mindestens eine oder mehr Platten 8 guter Qualität angeordnet, werden Lücken auf dem Träger 7 durch den Roboter 12 mit Platten 8 vom Träger 7 im Pufferbereich 2a aufgefüllt 108. Sobald ein Träger 7 vollständig mit Platten 8 aufgefüllt wurde, wird der aufgefüllte Träger 7 mittels der Hubstation auf den Haupttransportweg H befördert 109.

Ist der im Pufferbereich 2a befindliche Träger 7 nach dem Ablegen der fehlerhaften Platten 9 oder der Ausschussware 21 leer 104, wird der leere Träger 7 mittels der Hubstation von einem der Sortierplätze 2a, 2b auf den Haupttransportweg H befördert 105. Der Sortiervorgang 99 ist damit beendet 200.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichen

- 1: Kontrollstation
- 2: Sortierstation
- 2a: Sortierplatz, Pufferbereich
- 2b: Sortierplatz für ankommende Träger
- 2c: Sortierplatz für fehlerhafte Platten
- 2d: Sortierplatz, Ausschussbereich
- 3: Beleuchtungseinrichtung
- 3a: Kamera / Bildaufnahmeeinrichtung
- 4: Bediener
- 5: Fördereinrichtung / Förderband
- 6: Halterung in Form eines Gestells
- 7: Träger / Paletten
- 8: Platten guter Qualität
- 9: Fehlerhafte Platten
- 10: Ablagepalette
- 11: Paletten
- 12: Roboter / Roboterarm
- 14: Kontrolleinrichtung / Kontrollstab
- 15: Plattenproduktionsanlage
- 20: Behälter für Ausschussware
- 21: Ausschussware
- 30: Sockelmodul
- 31: Rotationsvorrichtung
- 32: Saug- oder Greifvorrichtung
- 40: Dachplatte
- 50: Markierungsvorrichtung
- 51: Vorderes Ende des Kontrollstabes
- 52: Griffbereich
- 53: Hinteres Ende
- 54: Mittelbereich
- 55a: Erste Betätigungseinrichtung
- 55b: Zweite Betätigungseinrichtung
- 100: Start
- 101: Träger mit Ausschuss Ja/Nein
- 102: Träger vollständig mit Ausschuss Ja/Nein
- 103: Ausschussware auf Träger
- 104: Puffer leer Ja/Nein
- 105: Einspeisung leerer Träger
- 106: Träger auf Pufferplatz
- 107: 3. Wahl wegwerfen
- 108: Auffüllen von Lücken
- 109: Einspeisen voller Träger
- 200: Ende
- B: Bypasstransportweg
- B2: Zugang zum Bypasstransportweg
- F: Förderrichtung
- H: Haupttransportweg
- L: Längsrichtung
- LK: Länge des Kontrollstabes
- Q: Querrichtung
- V: Vertikalrichtung

## Patentansprüche

1. Plattenproduktionsanlage (15) zur Produktion von Stein- und Betonplatten, wobei die Plattenproduktionsanlage (15) wenigstens zwei Arbeitsstationen zum Herstellen der Platten aufweist und eine Fördereinrichtung (5) welche die Platten in einer Förderrichtung (F) transportiert, eine Kontrollstation (1) zum Kontrollieren der Platten und eine Sortiereinrichtung (2) zum Sortieren der Platten aufweist, wobei mindestens eine Robotereinrichtung (12) zum Sortieren von Platten (8, 9) vorgesehen ist,
**dadurch gekennzeichnet, dass**
die Kontrollstation (1) eine Kontrolleinrichtung (14) zum Markieren einer Platte (8, 9) und eine Bildaufnahmeeinrichtung zum Erzeugen von Positionssignalen aufweist, welche an die Robotereinrichtung (12) sendbar sind, wobei die Kontrolleinrichtung als Kontrollstab ausgebildet ist und/oder die Kontrolleinrichtung mindestens eine erste Betätigungseinrichtung zum Senden eines ersten Signals aufweist, durch welches eine Bildaufnahme durch die Bildaufnahmeeinrichtung auslösbar ist, wobei die Kontrolleinrichtung einen Betätigungsbereich aufweist, an dem die Betätigungseinrichtung/en angeordnet ist/sind und ein vorderes Ende aufweist, welches dazu geeignet und bestimmt ist eine Position einer Platte (8, 9) auf einem Träger (7) digital zu erfassen

2. Plattenproduktionsanlage (15) nach Anspruch 1
**dadurch gekennzeichnet, dass**
die Kontrolleinrichtung (14) mehr Betätigungseinrichtungen, jedoch mindestens eine zweite und/oder eine dritte Betätigungseirnichtung zum Senden eines zweiten und/oder dritten Signals umfasst, durch welche/s eine Bildaufnahme durch die Bildaufnahmeeinrichtung auslösbar ist.

3. Plattenproduktionsanlage (15) nach einem der vorhergehenden Ansprüche
**dadurch gekennzeichnet, dass**
die Plattenproduktionsanlage (15) eine Empfangseinrichtung zum Empfangen der Positionssignale, eine Steuereinrichtung und/oder eine Auswerteeinrichtung zum Auswerten der Signale aufweist, wobei durch die Auswerteeinrichtung eine Auswertung der/des Signale/s durchführbar ist und Positionsdaten von Platten (8, 9) auf einem Träger ermittelbar sind.

4. Plattenproduktionsanlage (15) nach einem der vorhergehenden Ansprüche
**dadurch gekennzeichnet, dass**
Die Sortiereinrichtung (2) einen Roboterarm zum Aufgreifen und Ablegen einer Platte (8, 9) aufweist.

5. Plattenproduktionsanlage (15) nach einem der vorhergehenden Ansprüche
**dadurch gekennzeichnet, dass**
auf Basis der Positionsdaten markierte Platten (8, 9) durch den Roboterarm automatisch aufgreifbar und ablegbar und/oder automatisch voneinander trennbar sind.

6. Plattenproduktionsanlage (15) nach einem der vorhergehenden Ansprüche
**dadurch gekennzeichnet, dass**
die Kontrollstation (1) eine Beleuchtungseinrichtung (3) aufweist.

7. Plattenproduktionsanlage (15) nach einem der vorhergehenden Ansprüche
**dadurch gekennzeichnet, dass**
die Plattenproduktionsanlage einen Pufferbereich und/oder eine Pufferstrecke aufweist

8. Plattenproduktionsanlage (15) nach einem der vorhergehenden Ansprüche
**dadurch gekennzeichnet, dass**
die Bildaufnahmeeinrichtung und/oder die Beleuchtungseinrichtung (3) die Fördereinrichtung (5) in einer Distanz entlang der Vertikalrichtung (V) beabstandet und derart angeordnet ist, dass durch die Bildaufnahmeeinrichtung alle auf einem Träger (7) befindlichen Platten (8, 9) vollständig erfassbar sind und/oder alle auf einem Träger (7) befindlichen Platten (8, 9) vollständig und/oder gleichmäßig durch die Beleuchtungseinrichtung (3) beleuchtbar sind.

9. Verfahren zum Sortieren von Platten mittels einer Plattenproduktionsanlage (15) zur Produktion von Stein- und Betonplatten, wobei sich die Plattenproduktionsanlage in eine Längsrichtung (L), eine Querrichtung (Q) und eine Vertikalrichtung (V) erstreckt und eine Fördereinrichtung (5) welche die Platten in einer Förderrichtung fördert, eine Kontrollstation (1) und eine Sortiereinrichtung (2) mit mindestens einer Robotereinrichtung (12) zum Sortieren von Platten (8, 9) aufweist, wobei die Kontrollstation (1) datentechnisch mit der Sortiereinrichtung (2) verbunden ist und die Kontrollstation (1) eine Kontrolleinrichtung zum Markieren einer Platte (8, 9) und eine Bildaufnahmeeinrichtung zum Erzeugen von Positionssignalen aufweist, welche an die Robotereinrichtung (12) sendbar sind, wobei die Kontrolleinrichtung als Kontrollstab ausgebildet ist und/oder die Kontrolleinrichtung mindestens eine erste Betätigungseinrichtung zum Senden eines ersten Signals aufweist, durch welches eine Bildaufnahme durch die Bildaufnahmeeinrichtung auslösbar ist, wobei die Kontrolleinrichtung einen Betätigungsbereich aufweist, an dem die Betätigungseinrichtung/en angeordnet ist/sind und ein vorderes Ende aufweist, welches dazu geeignet und bestimmt ist eine Position einer Platte (8, 9) auf einem Träger (7) digital zu erfassen
**umfassend die Schritte:**
a. Markieren einer Platte mit der Kontrolleinrichtung (14),
b. Erzeugen wenigstens eines Positionssignals,
c. Automatisches aufgreifen einer markierten Platte (8, 9) durch die Robotereinrichtung auf Basis des Positionssignals,
d. Automatisches ablegen einer markierten Platte (8, 9) auf einer Ablagepalette (10, 11) durch die Robotereinrichtung.

10. Verfahren zum Sortieren von Platten nach Anspruch 9
**dadurch gekennzeichnet, dass**
Leerstellen mit weiteren Platten aufgefüllt werden

11. Verfahren zum Sortieren von Platten nach Anspruch 9
**dadurch gekennzeichnet, dass**
durch Betätigen einer Betätigungseinrichtung an der Kontrolleinrichtung eine Bildaufnahme durch die Bildaufnahmeeinrichtung ausgelöst wird.

12. Verfahren zum Sortieren von Platten nach einem der Ansprüche 9-11
**dadurch gekennzeichnet, dass**
eine Auswerteeinheit auf Basis des Positionssignals Positionsdaten ermittelt.

13. Verfahren zum Sortieren von Platten nach einem der Ansprüche 9-11
**dadurch gekennzeichnet, dass**
die Position eines vorderen Endes der Kontrolleinrichtung (14) erfasst wird und diese Position die Basis des Positionssignals bildet.

## Claims

1. Slab production plant (15) for the production of stone and concrete slabs, wherein the slab production plant (15) has at least two work stations for producing the slabs and a conveying device (5) which transports the slabs in a conveying direction (F), a checking station (1) for checking the slabs and a sorting device (2) for sorting the slabs, wherein at least one robot device (12) is provided for sorting slabs (8, 9), **characterised in that** the checking station (1) has a checking device (14) for marking a slab (8, 9) and an image recording device for generating position signals which can be transmitted to the robot device (12), wherein the checking device is designed as a checking rod and/or the checking device (14) has at least one first actuating device for transmitting a first signal which can trigger an image recording by the image recording device, wherein the checking device has an actuating region on which the actuating device(s) is/are arranged and a front end which is suitable and intended for digitally capturing a position of a slab (8, 9) on a support (7).

2. Slab production plant (15) according to claim 1, **characterised in that** the checking device (14) comprises more actuating devices, but at least one second and/or one third actuating device for transmitting a second and/or third signal which can trigger an image recording by the image recording device.

3. Slab production plant (15) according to any one of the preceding claims, **characterised in that** the slab production plant (15) has a receiving device for receiving the position signals, a control device and/or an evaluation device for evaluating the signals, wherein the evaluation device can carry out an evaluation of the signal(s) and can determine position data of slabs (8, 9) on a support.

4. Slab production plant (15) according to any one of the preceding claims, **characterised in that** the sorting device (2) has a robot arm for picking up and putting down a slab (8, 9).

5. Slab production plant (15) according to any one of the preceding claims, **characterised in that** slabs (8, 9) marked on the basis of the position data can be picked up and put down automatically and/or can be separated from one another automatically.

6. Slab production plant (15) according to any one of the preceding claims, **characterised in that** the checking station (1) has an illumination device (3).

7. Slab production plant (15) according to any one of the preceding claims, **characterised in that** the slab production plant has a buffer region and/or a buffer section.

8. Slab production plant (15) according to any one of the preceding claims, **characterised in that** the image recording device and/or the illumination device (3) is/are spaced apart from the conveying device (5) by a distance along the vertical direction (V) and arranged in such a way that all slabs (8, 9) located on a support (7) can be captured completely by the image recording device and/or all slabs (8, 9) located on a support (7) can be illuminated completely and/or uniformly by the illumination device (3).

9. Method for sorting slabs by means of a slab production plant (15) for the production of stone and concrete slabs, wherein the slab production plant extends in a longitudinal direction (L), a transverse direction (Q) and a vertical direction (V) and has a conveying device (5) which conveys the slabs in a conveying direction, a checking station (1) and a sorting device (2) with at least one robot device (12) for sorting slabs (8, 9), wherein the checking station (1) is connected by a data link to the sorting device (2) and the checking station (1) has a checking device for marking a slab (8, 9) and an image recording device for generating position signals which can be transmitted to the robot device (12), wherein the checking device is designed as a checking rod and/or the checking device (14) has at least one first actuating device for transmitting a first signal which can trigger an image recording by the image recording device, wherein the checking device has an actuating region on which the actuating device(s) is/are arranged and a front end which is suitable and intended for digitally capturing a position of a slab (8, 9) on a support (7),
comprising the steps:
a. marking a slab with the checking device (14),
b. generating at least one position signal,
c. automatically picking up a marked slab (8, 9) by the robot device on the basis of the position signal,
d. automatically putting down a marked slab (8, 9) on a storage pallet (10, 11) by the robot device.

10. Method for sorting slabs according to claim 9, **characterised in that** empty places are filled with further slabs.

11. Method for sorting slabs according to claim 9, **characterised in that** an image recording by the image recording device is triggered by actuation of an actuating device on the checking device.

12. Method for sorting slabs according to any one of claims 9 to 11, **characterised in that** an evaluation unit determines position data on the basis of the position signal.

13. Method for sorting slabs according to any one of claims 9 to 11, **characterised in that** the position of a front end of the checking device (14) is detected and this position forms the basis of the position signal.

## Revendications

1. Ligne de production de dalles (15), destinée à produire des dalles en pierre et en béton, la ligne de production de dalles (15) comportant au moins deux postes de travail, destinés à fabriquer les dalles et un système de convoyage (5), lequel transporte les dalles dans une direction de convoyage (F), un poste de contrôle (1), destiné à contrôler les dalles et un système de tri (2), destiné à trier les dalles, au moins un système robotisé (12) destiné à trier des dalles (8, 9) étant prévu,
**caractérisée en ce que**
le poste de contrôle (1) comporte un système de contrôle (14), destiné à marquer une dalle (8, 9) et un système de prise d'images, destiné à générer des signaux de position, lesquels sont susceptibles d'être envoyés au système robotisé (12), le système de contrôle étant conçu sous la forme d'une barre de contrôle et / ou le système de contrôle comportant au moins un premier système d'actionnement, destiné à envoyer un premier signal, par lequel une prise d'images par le système de prise d'images est susceptible d'être déclenchée, le système de contrôle comportant une zone d'actionnement, sur laquelle le/s système/s d'actionnement est / sont placés et une extrémité antérieure, laquelle est apte à et déterminée pour détecter numériquement une position d'une dalle (8, 9) sur le support (7).

2. Ligne de production de dalles (15) selon la revendication 1,
**caractérisée en ce que**
le système de contrôle (14) comprend plus de systèmes d'actionnement, toutefois au moins un deuxième et / ou un troisième système d'actionnement, destiné(s) à envoyer un deuxième et / ou un troisième signal, par le(s)quel(s) une prise d'images par le système de prise d'images est susceptible d'être déclenchée.

3. Ligne de production de dalles (15) selon l'une quelconque des revendications précédentes, **caractérisée en ce que**
la ligne de production de dalles (15) comporte un système récepteur, destiné à réceptionner les signaux de position, un système de commande et / ou un système d'évaluation, destiné à évaluer les signaux, par le système d'évaluation, une évaluation du signal / des signaux étant réalisable et des données de position de dalles (8, 9) sur un support étant susceptibles d'être déterminées.

4. Ligne de production de dalles (15) selon l'une quelconque des revendications précédentes, **caractérisée en ce que**
le système de tri (2) comporte un bras de robot, destiné à prendre et à déposer une dalle (8, 9).

5. Ligne de production de dalles (15) selon l'une quelconque des revendications précédentes, **caractérisée en ce que** ·
des dalles (8, 9) marquées sur la base des données de position sont susceptibles d'être prises et déposées automatiquement par le bras de robot et / ou d'être séparées automatiquement les unes des autres.

6. Ligne de production de dalles (15) selon l'une quelconque des revendications précédentes, **caractérisée en ce que**
le poste de contrôle (1) comporte un système d'éclairage (3).

7. Ligne de production de dalles (15) selon l'une quelconque des revendications précédentes, **caractérisée en ce que**
la ligne de production de dalles comporte une zone tampon ou un trajet tampon.

8. Ligne de production de dalles (15) selon l'une quelconque des revendications précédentes, **caractérisée en ce que**
le système de prise d'images et / ou le système d'éclairage (3), le système de convoyage (5) sont écartés d'une distance le long de la direction verticale (V) et placés de telle sorte que par le système de prise d'images, toutes les dalles (8, 9) se trouvant sur un support (7) puissent être totalement détectées et / ou toutes les dalles (8, 9) se trouvant sur un support (7) puissent être totalement et / régulièrement éclairées par le système d'éclairage (3) .

9. Procédé, destiné à trier des dalles au moyen d'une ligne de production de dalles (15), destinée à produire des dalles en pierre et / ou en béton, la ligne de production de dalles s'étendant dans une direction longitudinale (L), dans une direction transversale (Q) et dans une direction verticale (V) et un système de convoyage (5), lequel convoie les dalles dans une direction de convoyage, et comportant un poste de contrôle (1) et un système de tri (2) pourvu d'au moins un système robotisé (12), destiné à tirer des dalles (8, 9), le poste de contrôle (1) étant connecté par technique de données avec le système de tri (2) et le poste de contrôle (1) comportant un système de contrôle, destiné à marquer une dalle (8, 9) et un système de prise d'images, destiné à générer des signaux de position, lesquels sont susceptibles d'être envoyés au système robotisé (12), le système de contrôle étant conçu sous la forme d'une barre de contrôle et / ou le système de contrôle comportant au moins un premier système d'actionnement, destiné à envoyer un premier signal par lequel une prise d'images par le système de prise d'images est déclenchable, le système de contrôle comportant une zone d'actionnement sur laquelle est / sont placé/s le / les système/s d'actionnement et une extrémité antérieure, laquelle est apte à et déterminée pour détecter numériquement une position d'une dalle (8, 9) sur un support, (7),
comportant les étapes :
a. du marquage d'une dalle à l'aide du système de contrôle (14),
b. de la génération d'au moins un signal de position,
c. de la préhension automatique d'une dalle (8, 9) marquée par le système robotisé sur la base du signal de position,
d. de la dépose automatique d'une dalle (8, 9) marquée sur une palette de dépose (10, 11) par le système robotisé.

10. Procédé, destiné à trier des dalles selon la revendication 9,
**caractérisé en ce que**
des endroits vides sont remplis de dalles supplémentaires.

11. Procédé, destiné à trier des dalles selon la revendication 9,
**caractérisé en ce que**
par actionnement d'un système d'actionnement sur le système de contrôle, une prise d'images par le système de prise d'images est déclenchée.

12. Procédé, destiné à trier des dalles selon l'une quelconque des revendications 9 à 11,
**caractérisé**
**en ce qu'**une unité d'évaluation détermine des données de position sur la base du signal de position.

13. Procédé, destiné à trier des dalles selon l'une quelconque des revendications 9 à 11,
**caractérisé en ce que**
la position d'une extrémité antérieure du système de contrôle (14) est détectée et ladite position constitue la base du signal de position.
